# EUROPÄISCHE PATENTSCHRIFT

(11) **EP 4 008 916 B1**
(45) Veröffentlichungstag und Bekanntmachung des Hinweises auf die Patenterteilung: **30.10.2024**
(21) Anmeldenummer: 20211366.8
(22) Anmeldetag: 02.12.2020
(51) Int. Cl.: F16B 13/02, F16B 5/02, F16B 19/02

(54) **ANORDNUNG EINER STÜTZHÜLSE, EINES HOHLKÖRPERS UND EINES BEFESTIGUNGSMITTELS**
ARRANGEMENT OF A SUPPORTING SLEEVE, A HOLLOW BODY AND A FASTENING MEANS
AGENCEMENT D'UN MANCHON DE SUPPORT, D'UN CORPS CREUX ET D'UN MOYEN DE FIXATION

(43) Veröffentlichungstag der Anmeldung: 08.06.2022
(73) Patentinhaber: BBA S.r.l., 63076 Centobuchi di Monteprandone (AP) (IT)
(72) Erfinder: Hanratty, Paul, Southampton SO31 9BQ (GB)
(74) Vertreter: Franke, Markus

(56) Entgegenhaltungen:
- EP-A1- 2 240 699
- EP-B1- 2 240 699
- PT-E- 1 098 093
- US-A- 2 156 003
- US-A- 2 244 975

## Beschreibung

Die vorliegende Erfindung betrifft eine Anordnung aufweisend eine Stützhülse, einen Hohlkörper und ein Befestigungsmittel.

In der Praxis ist es häufig problematisch, bei Einwirken von Kräften auf einen Hohlkörper, beispielsweise infolge einer Befestigung eines weiteren Bauteils an diesem Körper, eine Verformung des Hohlkörpers zu vermeiden. Insbesondere ist es problematisch bei zwei in axialer Richtung beabstandeten, gegenüberliegenden Wandungen des Hohlkörpers und einem Einwirken von axialen Kräften eine Verformung zu vermeiden. Vorliegend wird unter Hohlkörper jedes Bauteil verstanden, das zwei in einer axialen Richtung beabstandete Wandungen aufweist, folglich zwischen diesen beiden Wandungen ein Zwischenraum gebildet ist. Es ist durchaus denkbar, dass in dem Zwischenraum ein weiches, folglich nicht formstabiles Material, wie beispielsweise ein Isoliermaterial, insbesondere ein Schaumstoff, angeordnet ist. Der Hohlkörper braucht nicht notwendigerweise vollumfänglich umschließende Wandungen aufzuweisen. Der Hohlkörper kann auch durchaus U-förmig ausgebildet sein, wobei die beiden Schenkel des U-förmigen Profils die in der axialen Richtung beabstandeten, gegenüberliegenden Wandungen bilden.

Zwar können zwischen beabstandet angeordneten Bauteilen Abstützelemente eingebracht werden. Allerdings ist bei dieser Art der Abstützung problematisch, dass es häufig notwendig ist, diese Bauteile bzw. den die Bauteile aufweisenden Hohlkörper zu handhaben, ohne dass die Gefahr besteht, dass eine zwischen die beiden Bauteile oder Bauteilabschnitte eingebrachte Abstützung seine Position bzw. Lage verändert. Um eine Lageänderung der Abstützung zu vermeiden, ist es heute üblich, derartige Abstützungen relativ aufwendig in zumindest einem der Bauteile zu fixieren, beispielsweise durch Umformen, Clinchen, Verkleben oder Verschweißen. Diese Maßnahmen sind sehr aufwendig und zudem besteht die Gefahr, dass bei der Durchführung dieser Fixierungsmaßnahmen das Bauteil bzw. der entsprechende Bauteilabschnitt beschädigt wird.

Aus der US 2 156 003 A ist ein hülsenförmiges Verbindungsmittel zum Verbinden von einem ersten Bauteil mit einem zweiten Bauteil bekannt. Das Verbindungsmittel wird in eine Durchgangsöffnung des ersten Bauteils eingesteckt, wobei das Verbindungsmittel an einer Außenfläche eine erste Haltestruktur aufweist, wobei das Verbindungsmittel durch die erste Haltestruktur in dem ersten Bauteil gehalten ist. Das zweite Bauteil weist einen Fortsatz auf, wobei dieser Fortsatz in das Verbindungsmittel eingesteckt wird, wobei das Verbindungsmittel an einer Innenfläche eine zweite Haltestruktur aufweist, wobei der Fortsatz in des zweiten Bauteils durch die zweite Haltestruktur gehalten ist. Die US 2 244 975 A1 offenbart ebenfalls ein hülsenförmiges Befestigungsmittel. Die WO 2009/097121 A1 offenbart eine Befestigungsanordnung, die zwei hülsenförmige Halteelemente mit Platte aufweist, wobei die Halteelemente in eine Hülse eingesteckt und dadurch miteinander verbunden werden. EP 2 240 699 A1 offenbart eine bekannte Anordnung.

Aufgabe der vorliegenden Erfindung ist es daher, eine Anordnung anzugeben, die die vorgenannten Problematiken löst.

Diese Aufgabe wird durch eine Anordnung, die die Merkmale des Anspruchs 1 aufweist, gelöst. Vorteilhafte Weiterbildungen sind Gegenstand der Unteransprüche.

Die erfindungsgemäße Anordnung weist eine Stützhülse, einen Hohlkörper und ein Befestigungsmittel auf.

Die Stützhülse ist einteilig ausgebildet, wobei die Stützhülse einen Schaft mit einem ersten Schaftabschnitt, einem in axialer Richtung an den ersten Schaftabschnitt angrenzenden zweiten Schaftabschnitt und einem in axialer Richtung an den zweiten

Schaftabschnitt angrenzenden dritten Schaftabschnitt aufweist. Der dritte Schaftabschnitt bildet dabei ein Ende der Stützhülse. Der zweite Schaftabschnitt weist ein Haltemittel auf, wobei das Haltemittel gegenüber dem ersten und dem dritten Schaftabschnitt nach radial außen hervorsteht und entgegen einer Rückstellkraft nach radial innen verformbar ist. Der Schaft weist über die gesamte axiale Länge des Schafts einen Schlitz auf.

Der Hohlkörper weist zwei in axialer Richtung beabstandete Wandungen aufweist, wobei die erste Wandung der zwei Wandungen eine erste Durchgangsöffnung und die zweite Wandung der zwei Wandungen eine zweite Durchgangsöffnung, vorzugsweise eine der ersten Durchgangsöffnung in einer axialen Richtung gegenüberliegende, zweite Durchgangsöffnung aufweist, wobei die Stützhülse die erste Durchgangsöffnung durchsetzt, wobei das Haltemittel auf einer der zweiten Wandung zugewandten Seite der ersten Wandung angeordnet ist und das Haltemittel die erste Wandung auf der der zweiten Wandung zugewandten Seite in axialer Richtung hintergreift, wobei das Befestigungsmittel die Stützhülse und die beiden Durchgangsöffnungen durchsetzt, wobei das Befestigungsmittel auf den einander abgewandten Seiten der zwei Wandungen jeweils ein Anschlagselement aufweist, wobei das eine Anschlagselement gegenüber dem anderen Anschlagselement in der axialen Richtung verstellbar, wobei die Stützhülse die zweite Wandung auf einer der ersten Wandung zugewandten Seite kontaktiert.

Die Anschlagselemente dienen dem Verspannen des Befestigungsmittels gegen den Hohlkörper. Bei dem Befestigungsmittel kann es sich beispielsweise um einen Schrauben-Mutter-Anordnung oder eine Anordnung von einem Gewindestab und zwei Muttern handeln. Typischerweise werden zwischen dem Hohlkörper und zumindest einem der Anschlagselemente weitere Bauteile eingebracht, die auf diese Weise mit dem Hohlkörper verbunden werden. Beim Verspannen des Befestigungsmittels gegen den Hohlkörper nimmt die Stützhülse die durch das Verspannen aufgebrachten Kräfte auf, sodass eine Verformung des Hohlkörpers vermieden wird.

Gemäß der Erfindung kontaktiert die Stützhülse die zweite Wandung auf einer der ersten Wandung zugewandten Seite.

Nach dem Einbringen der Stützhülse in die entsprechende Durchgangsöffnung der Wandung des Hohlkörpers, von einer ersten Seite der Wandung aus, hält das Haltemittel die Stützhülse in der Wandung und verhindert ein ungewolltes Lösen oder Herausfallen der Stützhülse aus der Wandung. Die Stützhülse ist somit durch das Haltemittel quasi verliersicher in der Wandung gelagert. Dadurch kann der Hohlkörper ohne besondere Vorsichtsmaßnahmen gehandhabt werden. Insbesondere kann auf aufwendige Fixierungsmaßnahmen der Stützhülse in der Wandung, wie beispielsweise ein Umformen, Clinchen, Verkleben oder Verschweißen, verzichtet werden. Es ist durchaus denkbar, dass die Stützhülse mittels des Haltemittels kraftschlüssig in der Wandung gehalten ist. Vorzugsweise ist die Stützhülse allerdings mittels des Haltemittels formschlüssig an der Wandung gehalten. Vorzugsweise verformt sich das Haltemittel aufgrund der Rückstellkraft auf einer der ersten Seite gegenüberliegenden zweiten Seite der Wandung nach radial außen, sodass das Haltemittel oder zumindest ein Teilbereich des Haltemittels nach dem Einbringen der Stützhülse in den Hohlkörper die Wandung in axialer Richtung hintergreift. Vorzugsweise ist der erste Schaftabschnitt in der Durchgangsöffnung angeordnet. Dadurch ist die Stützhülse auch in radialer Richtung verliersicher in der Wandung gelagert.

Dadurch, dass die Stützhülse einteilig ausgebildet ist, kann sie besonders einfach hergestellt werden. Ferner ist durch die Einteiligkeit die Handhabung erleichtert. Beispielsweise muss bei der Montage der Stützhülse in der Wandung bzw. in dem Hohlkörper nicht auf eine bestimmte Reihenfolge geachtet werden und/oder die Stützhülse zunächst vormontiert werden. Vielmehr ist die Verwendung der Stützhülse denkbar einfach: Die Stützhülse muss lediglich durch die Durchgangsöffnung eingeführt werden. Dadurch werden Montagefehler vermieden.

Durch den Schlitz wird die Verformung des Schafts in radialer Richtung erleichtert bzw. ermöglicht oder zumindest das Ausmaß der Verformung gegenüber einem Schaft ohne Schlitz vergrößert. Dadurch ist wiederum die Montage vereinfacht, da auch bei nur geringem Spiel oder keinem Spiel zwischen der Abmessung der Durchgangsöffnung und der Abmessung des unverformten Schafts dennoch ein Einbringen der Stützhülse möglich ist. Ferner kann bei einem weitem Spiel der Schaft vorab oder nachträglich aufgeweitet werden, um das radiale Spiel des Schafts in der Durchgangsöffnung zu verkleinern. Dadurch sind ein und dieselbe Stützhülse für ein weiten Bereich von Abmessungen der Durchgangsöffnung geeignet. Dadurch kann die Lagerhaltung reduziert werden.

Im Zusammenhang mit dem Schlitz wird es als besonders vorteilhaft angesehen, wenn sich der Schlitz über die gesamte axiale Länge der Stützhülse erstreckt.

Vorzugsweise ist der Schlitz geradlinig und/oder parallel zu der axialen Richtung ausgebildet. Bei einer Ausbildung des Schlitzes parallel zu der axialen Richtung ist die Stabilität der Stützhülse gegen axial einwirkende Kräfte durch den Schlitz kaum beeinträchtigt.

Vorzugsweise weist der Schlitz eine konstante Schlitzbreite auf.

Im Hinblick auf eine besonders hohe Stabilität, insbesondere zwecks Aufnahme von axialen Kräften, wird es als vorteilhaft angesehen, wenn der Schaft genau einen Schlitz aufweist.

Ferner wird es als besonders vorteilhaft in dieser Hinsicht angesehen, wenn der dritte Schaftabschnitt und/oder der erste Schaftabschnitt, vorzugsweise der dritte Schaftabschnitt und der erste Schaftabschnitt, besonders bevorzugt der gesamte Schaft, abgesehen von dem Schlitz, frei von sonstigen Materialschwächungen, beispielsweise Durchgangsöffnungen, weiteren Schlitzen, Ausnehmungen und/oder Bohrungen, ist.

Es wird als besonders vorteilhaft angesehen, wenn ein Teilbereich des ersten Schaftabschnitts entgegen der axialen Richtung gegenüber dem Haltemittel hervorsteht.

Hinsichtlich einer besonders einfachen Fertigung und dennoch hohen Stabilität hinsichtlich der Aufnahme von axialen Kräften wird es als vorteilhaft angesehen, wenn der dritte Schaftabschnitt über die gesamte axiale Länge des dritten Schaftabschnitts einen konstanten Querschnitt aufweist, insbesondere der Schaft über die gesamte axiale Länge des Schafts, außer im Bereich der Haltemittel, einen konstanten Querschnitt aufweist.

Vorzugsweise weisen der erste Schaftabschnitt und der dritte Schaftabschnitt eine geschlossene Mantelfläche auf.

Vorzugsweise weist der Schaft eine Wandung auf, wobei die Wandung über die gesamten axiale Länge des dritten Schaftabschnitts, insbesondere über die gesamte axiale Länge des dritten Schaftabschnitts und über die gesamte axiale Länge des ersten Schaftabschnitts, vorzugsweise über den gesamte axiale Länge des Schafts parallel zu der axialen Richtung verläuft.

Vorzugsweise weist der Schaft in einer Schnittebene senkrecht zu der axialen Richtung eine Außenkontur auf, wobei die Außenkontur kreisförmig oder ellipsenförmig ist, oder die Außenkontur die Form eines Vielecks, insbesondere eines Vielecks mit abgerundeten Ecken, aufweist.

Als besonders vorteilhaft wird es angesehen, wenn das Haltemittel mehrere Halteelemente aufweist. Die Halteelemente können beispielsweise als Haltenasen, als Wulste oder als Stege ausgebildet sein.

Bei mehreren Halteelementen wird es als besonders vorteilhaft angesehen, wenn diese umlaufend angeordnet sind. Die Halteelemente sind vorzugsweise in axialer Richtung in derselben Ebene angeordnet. Dadurch wird das Einbringen der Stützhülse in eine Durchgangsöffnung einer Wandung erleichtert, da eine Verkippung der Stützhülse beim Einbringen vermieden wird.

Die Halteelemente sind insbesondere rotationssymmetrisch bezüglich einer in axialer Richtung ausgebildeten Achse angeordnet, wobei eine Zähligkeit n > 1 ist, vorzugsweise die Zähligkeit n der Anzahl der Halteelemente entspricht.

Die Stützhülse ist insbesondere dazu ausgebildet, ein die Stützhülse durchsetzendes Befestigungsmittel aufzunehmen. Zu diesem Zweck wird es als vorteilhaft angesehen, wenn die Stützhülse an in axialer Richtung gegenüberliegenden Enden jeweils eine in axialer Richtung durchsetzbare Öffnung aufweist.

Als besonders vorteilhaft wird es angesehen, wenn die Stützhülse einen Kopfabschnitt aufweist, wobei der erste Schaftabschnitt in axialer Richtung an den Kopfabschnitt angrenzt, wobei der Kopfabschnitt nach radial außen gegenüber dem dritten Schaftabschnitt hervorsteht, vorzugsweise nach radial außen gegenüber den Haltemitteln hervorsteht. Der Kopfabschnitt dient insbesondere als Anschlag, um ein weiteres Einführen der Stützhülse in eine Durchgangsöffnung einer Wandung zu verhindern sobald der Kopfabschnitt an der Wandung anliegt. Ferner wird durch den Kopfabschnitt vermieden, dass die Stützhülse in der axialen Richtung aus der Durchgangsöffnung herausfällt. Vorzugsweise ist der Kopfabschnitt derart gestaltet, dass dieser auf der ersten Seite der Wandung zur Anlage kommt, von der aus die Stützhülse in die Durchgangsöffnung eingebracht wird.

Vorzugsweise weist der Kopfabschnitt einen sich in Richtung des Schafts verjüngenden Querschnitt auf. Insbesondere ist der Kopfabschnitt als Senkkopf ausgebildet.

Vorzugsweise nimmt der radiale Überstand des Haltemittels, insbesondere des jeweiligen Halteelements, entgegen der axialen Richtung zu. Insbesondere ist das Haltemittel, vorzugsweise das jeweilige Halteelement, keilförmig ausgebildet. Durch diese Gestaltung wird ein Einführen der Stützhülse in eine Durchgangsöffnung einer Wandung erleichtert, da die Zunahme im Querschnitt bzw. die Keilform eine Krafteinwirkung auf das Haltemittel bzw. die Halteelemente nach radial innen beim Einführen begünstigt.

Besonders bevorzugt weist das Haltemittel mehrere als Stege ausgebildete Halteelemente auf, wobei der jeweilige Steg im Bereich eines Endes des Stegs, insbesondere im Bereich eines dem dritten Schaftabschnitt zugewandten Endes des Stegs, mit dem übrigen Schaft verbunden ist und das andere Ende des jeweiligen Stegs ein freies Ende ist.

Als besonders vorteilhaft wird es angesehen, wenn der zweite Schaftabschnitt eine Ausnehmung zur Aufnahme der Stege, bei einem Verformen der Stege nach radial innen, aufweist oder wobei der zweite Schaftabschnitt jeweils eine Ausnehmung zur Aufnahme des jeweiligen Stegs, bei einem Verformen des jeweiligen Stegs nach radial innen, aufweist.

Die Gestaltung mit Ausnehmungen begünstigt, dass der Steg besonders weit nach radial innen umgeformt werden kann.

Insbesondere weist die jeweilige Ausnehmung eine tangentiale Erstreckung auf, wobei die tangentiale Erstreckung der jeweiligen Ausnehmung größer ist als eine tangentiale Erstreckung des jeweiligen Stegs. Die größere tangentiale Erstreckung vermeidet, dass eine tangentiale Verformung des Stegs ein Verformen des Stegs nach radial innen behindert. Insofern ist ein gewisses tangentiales Spiel zwischen Ausnehmung und Steg gegeben.

Die Ausnehmung kann als Rücksprung oder als Durchgangsöffnung ausgebildet sein.

Vorzugsweise ist die Stützhülse durch einen gebogenen Metallstreifen, insbesondere durch ein gebogenes Blech, gebildet. Das Haltemittel, insbesondere die Halteelemente, sind vorzugsweise durch einen herausgebogenen Teilbereich des Metallstreifens gebildet. Diese Art der Gestaltung der Stützhülse kann besonders einfach und kostengünstig hergestellt werden.

In einer bevorzugten Ausführungsform der Stützhülse ist die Stützhülse frei von stoffschlüssigen Verbindungen, wie beispielsweise einer Schweißnaht oder Ähnlichem.

Die Stützhülse besteht insbesondere aus einem Metall oder einer Metalllegierung. Bevorzugt besteht die Stützhülse aus einem Stahl, vorzugsweise einem Federstahl.

In einer bevorzugten Ausführungsform ist der Schaft im Wesentlichen in Art eines Hohlzylinders, insbesondere in Art eines Hohlzylinders mit kreisringförmiger Grundfläche, ausgebildet.

Der Querschnitt des ersten und des dritten Schaftabschnitts ist vorzugsweise oval, insbesondere kreisförmig oder ellipsenförmig.

Es wird als vorteilhaft angesehen, wenn der Schaft in einer Schnittebene senkrecht zu der axialen Richtung eine Außenkontur mit einem Gesamtumfang aufweist, wobei ein Anteil des Schlitzes am Gesamtumfang kleiner oder gleich 0,05, bevorzugt kleiner oder gleich 0,03, besonders bevorzugt kleiner oder gleich 0,02 ist. Insbesondere beträgt der Anteil zwischen 0,01 und 0,05. Bei einer derartigen Ausführungsform ist eine ausreichende Elastizität des Schafts zwecks radialer Verformung des Schafts bei dennoch hoher axialer Stabilität des Schafts gewährleistet. Unter Gesamtumfang ist vorliegend der Umfang des Schafts inklusive des Schlitzes zu verstehen. Beispielsweise ist der Gesamtumfang der Außenkontur des Schafts bei einem kreisförmigen Schaft, der lediglich im Bereich des Schlitzes eine Unterbrechung aufweist, identisch mit dem entsprechenden Kreisumfang.

Vorzugsweise weist der Schaft in einer Schnittebene senkrecht zu der axialen Richtung im Bereich der Ausnehmungen eine Außenkontur mit einem Gesamtumfang auf, wobei ein Anteil der Ausnehmungen am Gesamtumfang der Außenkontur kleiner oder gleich 0,3, bevorzugt kleiner oder gleich 0,08, vorzugsweise zwischen 0,06 und 0,3, ist.

Es wird als vorteilhaft angesehen, wenn eine Breite des Schlitzes 0,05 mm bis 4 mm beträgt.

Vorzugsweise beträgt eine Breite der Ausnehmungen 0,05 mm bis 4 mm. Vorzugsweise ist die Breite der Ausnehmungen größer als die Schlitzbreite.

Vorzugsweise beträgt eine Wanddicke des Schafts 1 mm bis 5 mm.

Es wird als besonders vorteilhaft angesehen, wenn die Breite des Schlitzes das 0,7-Fache bis 1,4-Fache der Wanddicke des Schafts beträgt.

Es wird als vorteilhaft angesehen, wenn der Schaft eine axiale Länge von 2 cm bis 15 cm aufweist. Vorzugsweise weist der Schaft eine Breite, insbesondere einen Durchmesser, von 1 cm bis 4 cm auf.

Vorzugsweise beträgt eine axiale Länge des Haltemittels 5% bis 15% der axialen Länge des Schafts.

Vorzugsweise besteht die Stützhülse lediglich aus dem ersten, dem zweiten und dem dritten Schaftabschnitt.

Ein Verfahren zur Herstellung der Stützhülse weist die folgenden Verfahrensschritte auf:
- Herstellen oder Bereitstellen eines, vorzugsweise ebenen, Metallstreifens, insbesondere eines Blechs, bevorzugt einer Blechabwicklung,
- Freistellen, insbesondere mittels Stanzen und/oder Einschneiden und/oder Schlitzen, eines Teilbereichs oder mehrerer Teilbereiche des Metallstreifens, wobei der Teilbereich oder der jeweilige Teilbereich über einen Verbindungsabschnitt mit dem übrigen Metallstreifen derart verbunden ist, dass der Teilbereich gegenüber dem übrigen Metallstreifen herausbiegbar ist oder der jeweilige Teilbereich gegenüber dem Metallstreifen herausbiegbar ist,
- Herausbiegen des Teilbereichs oder der Teilbereiche gegenüber dem übrigen Metallstreifen,
- Biegen des Metallstreifens derart, dass der Metallstreifen eine radial umlaufende Wandung bildet zwecks Ausbildung des Schafts der Stützhülse, wobei der herausgebogene Teilbereich ein gegenüber dem übrigen Metallstreifen nach radial außen hervorstehendes Haltemittel bildet oder wobei die herausgebogenen Teilbereiche gegenüber dem übrigen Metallstreifen nach radial außen hervorstehende Halteelemente bilden.

Die Verfahrensschritte werden vorzugsweise in der beschriebenen Reihenfolge durchgeführt. Die Verfahrensschritte müssen aber nicht notwendigerweise in der beschriebenen Reihenfolge durchgeführt werden. So kann das Herausbiegen der Teilbereiche auch nach dem Biegen des Metallstreifens erfolgen.

Vorzugsweise kontaktiert die Stützhülse die zweite Wandung unmittelbar. Dies ist insbesondere dann von Vorteil, wenn ein elektrischer Kontakt zwischen der zweiten Wandung und der Stützhülse erreicht werden soll.

Vorzugsweise ist eine radiale Erstreckung des dritten Schaftabschnitts und des ersten Schaftabschnitts kleiner als eine radiale Erstreckung der ersten Durchgangsöffnung. Dadurch ist das Einbringen der Stützhülse in die erste Durchgangsöffnung erleichtert. Zudem kann die Stützhülse in der radialen Richtung etwas verschoben werden, beispielsweise um Fertigungstoleranzen, insbesondere hinsichtlich einer Fluchtung der beiden Durchgangsöffnungen, auszugleichen.

Vorzugsweise erfolgt die Bildung der Anordnung nach einem der vorigen Aspekte mit dem folgenden Verfahren:
- Bereitstellen einer Stützhülse, wobei die Stützhülse einen Schaft mit einem ersten Schaftabschnitt, einem in axialer Richtung an den ersten Schaftabschnitt angrenzenden zweiten Schaftabschnitt und einem in axialer Richtung an den zweiten Schaftabschnitt angrenzenden dritten Schaftabschnitt aufweist, wobei der dritte Schaftabschnitt ein Ende der Stützhülse bildet, wobei der zweite Schaftabschnitt ein Haltemittel aufweist, wobei das Haltemittel gegenüber dem ersten und dem dritten Schaftabschnitt nach radial außen hervorsteht und entgegen einer Rückstellkraft nach radial innen verformbar ist, wobei der Schaft über die gesamte axiale Länge des Schafts einen Schlitz aufweist, ,
- Bereitstellen eines Hohlkörpers, wobei der Hohlkörper zwei in axialer Richtung beabstandete Wandungen aufweist, wobei die erste Wandung der zwei Wandungen ein erste Durchgangsöffnung und die zweite Wandung der zwei Wandungen eine zweite Durchgangsöffnung, vorzugsweise eine der ersten Durchgangsöffnung in axialer Richtung gegenüberliegende, zweite Durchgangsöffnung aufweist,
- Einführen, vorzugsweise händisches Einführen, der Stützhülse in die erste Durchgangsöffnung von einer der zweiten Wandung abgewandten Seite der ersten Wandung aus, derart, dass das Haltemittel beim Einführen zunächst entgegen der Rückstellkraft nach radial innen verformt wird und im Anschluss an die Verformung nach radial innen sich das Haltemittel aufgrund der Rückstellkraft nach radial außen verformt, sodass das Haltemittel auf einer der zweiten Wandung zugewandten Seite der ersten Wandung angeordnet ist und die erste Wandung auf der der zweiten Wandung zugewandten Seite in axialer Richtung hintergreift.

Anhand der nachfolgenden Figuren wird die Erfindung näher erläutert, ohne auf diese beschränkt zu sein.

Es zeigen:
- Fig. 1: eine Stützhülse in einer teilweise geschnittenen Darstellung gemäß den Pfeilen I in Fig. 2,
- Fig. 2: die Stützhülse in einer Ansicht gemäß dem Pfeil II in Fig. 1,
- Fig. 3: die Stützhülse in einer Ansicht gemäß dem Pfeil III in Fig. 1,
- Fig. 4: eine weitere Stützhülse in einer teilweise geschnittenen Ansicht gemäß den Pfeilen IV in Fig. 5,
- Fig. 5: die Stützhülse in einer Ansicht gemäß dem Pfeil V in Fig. 4,
- Fig. 6: eine Anordnung einer Stützhülse, eines Hohlkörpers und eines Befestigungsmittels in einer Schnittansicht.

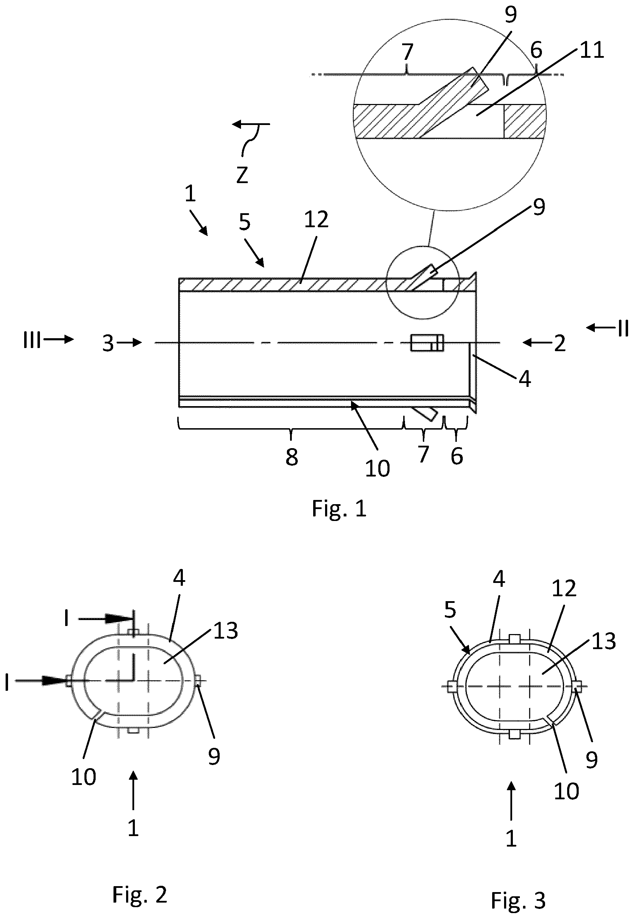

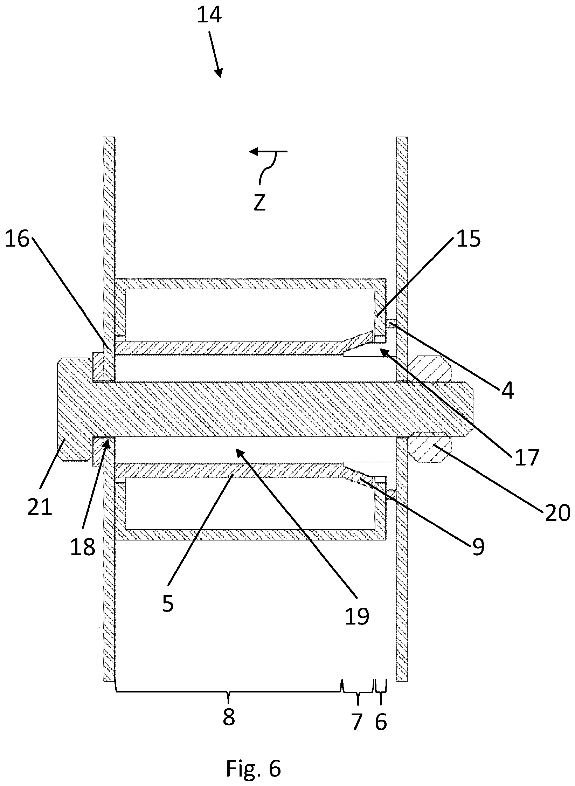

Die Fig. 1 bis 3 zeigen eine Stützhülse 1. Die Stützhülse 1 dient insbesondere zur Aufnahme von mittels eines Befestigungsmittels 19 aufgebrachten axialen Kräften, insbesondere zum Abstützen von beabstandet angeordneten Bauteilen oder Bauteilabschnitten, wie dies exemplarisch in der Fig. 6 dargestellt ist.

Die Stützhülse 1 weist eine in axialer Richtung Z ausgebildete Durchtrittssöffnung 13 auf, die zur Aufnahme des Befestigungsmittels 19 dient. Die Stützhülse 1 weist einen Schaft 5 mit einem ersten Schaftabschnitt 6, einem in axialer Richtung Z an dem ersten Schaftabschnitt 6 angrenzenden zweiten Schaftabschnitt 7 und einem in axialer Richtung Z an den zweiten Schaftabschnitt 7 angrenzenden dritten Schaftabschnitt 8 auf. Der dritte Schaftabschnitt 8 bildet dabei ein Ende 3 der beiden Enden 2, 3 der Stützhülse 1.

Der zweite Schaftabschnitt 7 weist ein Haltemittel in Form von mehreren Halteelementen 9 auf, wobei das jeweilige Halteelement 9 gegenüber dem ersten und dem dritten Schaftabschnitt 6, 8 nach radial außen hervorsteht und entgegen einer Rückstellkraft nach radial innen verformbar ist.

Der Schaft 5 weist ferner über die gesamte axiale Länge des Schafts 5 einen Schlitz 10 auf, wobei sich der Schlitz 10 in der über die gesamte axiale Länge der Stützhülse 1 erstreckt.

Die Stützhülse 1 ist einteilig ausgebildet und ist durch einen gebogenen Metallstreifen, vorliegend einem Blech, gebildet. Die Halteelemente 9 sind durch herausgebogene Teilbereiche des Metallstreifens gebildet, wobei die Halteelemente 9 vorliegend als Stege ausgebildet sind. Der jeweilige Steg ist im Bereich eines Endes des Stegs, der dem dritten Schaftabschnitt 8 zugewandt ist, mit dem übrigen Schaft 5 verbunden. Das andere Ende des jeweiligen Stegs ist als freies Ende ausgebildet. Der zweite Schaftabschnitt 7 weist jeweils eine Ausnehmung 11 zur Aufnahme des jeweiligen Stegs auf, bei einem Verformen des jeweiligen Stegs nach radial innen.

Vorliegend weist die Stützhülse 1 genau einen Schlitz 10 auf. Dementsprechend ist der Schaft 5 bzw. die Stützhülse 1, abgesehen von dem genau einen Schlitz 10 und den Ausnehmungen 11, frei von irgendwelchen Materialschwächungen, insbesondere frei von irgendwelchen weiteren Schlitzen oder Ausnehmungen.

Der Schlitz 10 ist vorliegend geradlinig und parallel zu der axialen Richtung Z ausgebildet.

Abgesehen von den Ausnehmungen 11 und dem Schlitz 10 weist der Schaft 5 eine geschlossene Mantelfläche auf.

Eine Wandung 12 des Schafts 5 weist eine im Wesentlichen konstante Dicke auf, wobei die Dicke der Wandung 12 vorliegend größer ist als eine Schlitzbreite des Schlitzes 10. Vorliegend beträgt die Dicke der Wandung 12 etwa 3 mm und die Schlitzbreite beträgt etwa 1 mm. Die Schaftlänge in axialer Richtung beträgt vorliegend etwa 4,2 cm.

Der dritte Schaftabschnitt 8 und der erste Schaftabschnitt 6 sind bis auf ihre axiale Erstreckung identisch ausgebildet.

Der dritte Schaftabschnitt 8 weist über die gesamte axiale Länge des dritten Schaftabschnitts 8 einen konstanten Querschnitt auf, wobei dieser Querschnitt eine ovale Außenkontur aufweist, die im Wesentlich die Form von zwei beabstandeten Halbkreisen mit Verbindungsstegen, die die Halbkreise verbinden, aufweist.

Ein Anteil des Schlitzes 10 am Gesamtumfang der Außenkontur beträgt vorliegend etwa 0,015.

Vorliegend weist die Stützhülse 1 einen Kopfabschnitt 4 auf, wobei der erste Schaftabschnitt 6 in axialer Richtung Z an den Kopfabschnitt 4 angrenzt, wobei der Kopfabschnitt 4 nach radial außen gegenüber dem dritten Schaftabschnitt 8 und dem ersten Schaftabschnitt 6 hervorsteht. Der Kopfabschnitt 4 ist vorliegend als Senkkopf ausgebildet. Das Haltemittel, nämlich die Halteelemente 9, steht vorliegend radial gegenüber dem Kopfabschnitt 4 hervor. Der Kopfabschnitt 4 bildet das andere Ende 2 der beiden in axialer Richtung Z gegenüberliegenden Enden 2, 3 der Stützhülse 1.

Der radiale Überstand der Halteelemente 9 nimmt vorliegend entgegen der axialen Richtung Z zu, sodass die Halteelemente 9 in ihrer Gesamtheit eine in Richtung des dritten Schaftabschnitts 8 konisch abnehmende Außenkontur bilden.

Eine Anordnung einer erfindungsgemäßen Stützhülse 1, eines Hohlkörpers 14 und eines Befestigungsmittels 19 ist in der Fig. 6 gezeigt. Der Hohlkörper 14 weist zwei in axialer Richtung Z beabstandete Wandungen 15, 16 auf, wobei die erste Wandung 15 der zwei Wandungen 15, 16 eine erste Durchgangsöffnung 17 und die zweite Wandung 16 der zwei Wandungen 15, 16 eine zweite Durchgangsöffnung 18 aufweist, wobei die Durchgangsöffnung 18 und die Durchgangsöffnung 17 koaxial angeordnet sind. Die Stützhülse 1 durchsetzt die erste Durchgangsöffnung 17, wobei die Halteelemente 9 auf einer der zweiten Wandung 16 zugewandten Seite der ersten Wandung 15 angeordnet sind. Die Halteelemente 9 hintergreifen die erste Wandung 15 auf der der zweiten Wandung 16 zugewandten Seite in axialer Richtung Z.

Vorliegend weist die Stützhülse 1 wiederum einen Kopfabschnitt 4 auf, wobei die Wandung 15 zwischen dem Kopfabschnitt 4 und den Halteelementen 9 angeordnet ist. Somit ist die Stützhülse 1 durch die Halteelemente 9 und den Kopfabschnitt 4 klemmend in der Wandung 15 gehalten. Der erste Schaftabschnitt 6 durchsetzt dabei die Durchgangsöffnung 17 derart, dass der erste Schaftabschnitt 6 mit einem gewissen Spiel in der ersten Durchgangsöffnung 17 gelagert ist. Durch das radiale Spiel kann die Stützhülse 1 noch in gewissen Maßen radial ausgerichtet werden. Vorliegend durchsetzt der dritte Schaftabschnitt 8 der Stützhülse 1 eine weitere Öffnung eines kastenförmigen Bauteils, dem auch die Wandung 15 zuzuordnen ist. Der dritte Schaftabschnitt 8 kommt an der zweiten Wandung 16 in axialer Richtung Z zur Anlage und stützt sich somit in axialer Richtung Z an der zweiten Wandung 16 ab. Somit stützen sich die beiden Wandungen 15 und 16 vermittelt durch die Stützhülse 1 in axialer Richtung Z gegeneinander ab, sodass der Hohlraum zwischen den beiden Wandungen 15, 16 versteift ist.

Bei Einwirken von axialen Kräften auf eine der beiden Wandungen 15, 16, insbesondere bei Einwirken von axialen Kräften auf die Wandungen 15, 16 in Richtung der jeweils anderen Wandung 15, 16 wird somit eine Verformung vermieden. Derartige Kräfte treten beispielsweise aufgrund des Befestigungsmittels 19 auf, welches die Stützhülse 1 und die beiden Durchgangsöffnungen 17, 18 durchsetzt. Das Befestigungsmittel 19 weist zwei Anschlagselemente 20, 21 auf, wobei die beiden Anschlagselemente 20, 21 auf einander abgewandten Seiten der beiden Wandungen 15, 16 angeordnet sind und in der axialen Richtung Z in ihrem jeweiligen Abstand zueinander verstellbar sind. Mittels des Befestigungsmittels 19, das vorliegend durch eine Schrauben-Mutter-Anordnung gebildet ist, werden aufeinander zugerichtete axiale Kräfte auf die beiden Wandungen 15, 16 ausgeübt. Die Stützhülse 1 vermeidet, dass es bei einem Anziehen bzw. Verspannen des Befestigungsmittels 19 zu einer ungewollten Verformung der beiden Wandungen 15, 16 kommt.

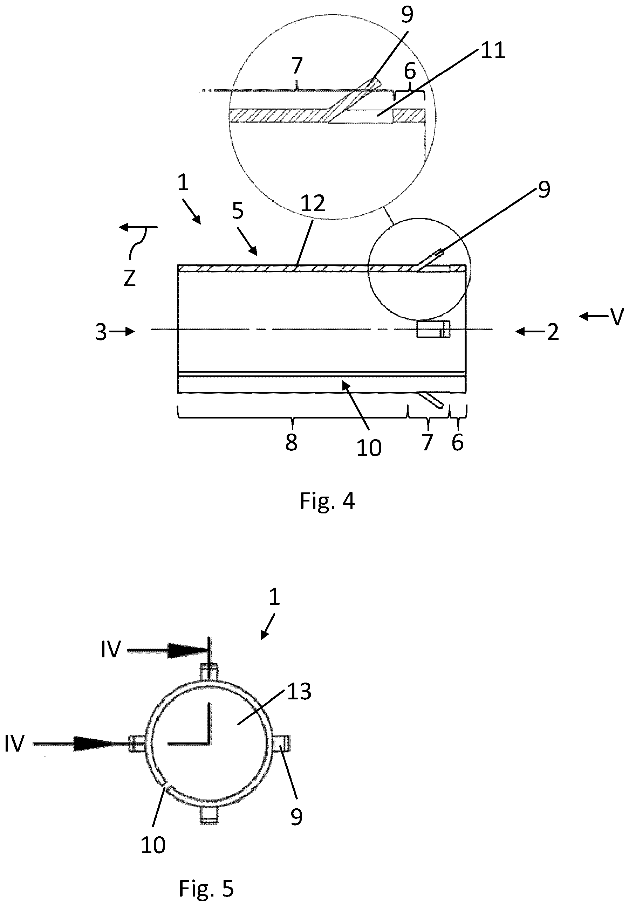

Die Fig. 4 und 5 zeigen eine weitere Stützhülse 1, die sich von der Stützhülse gemäß der Fig. 1 bis 3 im Wesentlichen dadurch unterscheidet, dass die Stützhülse 1 keinen Kopfabschnitt aufweist, sondern allein durch den Schaft 5 gebildet ist. Ferner weist der dritte Schaftabschnitt 8 in einem Schnitt senkrecht zu der axialen Richtung Z eine kreisförmige Außenkontur auf.

Eine derartige Stützhülse 1 ist besonders einfach und kostengünstig zu fertigen. Beispielsweise kann die Herstellung der Stützhülse 1 nach dem Verfahren mit den folgenden Verfahrensschritten erfolgen:
- Bereitstellen einer Blechabwicklung,
- Freistellen mehrerer Teilbereiche des Metallstreifens, beispielsweise mittels Stanzen, wobei der jeweilige Teilbereich über einen Verbindungsabschnitt mit dem übrigen Metallstreifen derart verbunden ist, dass der jeweilige Teilbereich gegenüber dem übrigen Metallstreifen herausbiegbar ist. Insbesondere ist der Verbindungsabschnitt mit dem dritten Schaftabschnitt 8 verbunden.
- Herausbiegen der Teilbereiche gegenüber dem übrigen Metallstreifen, vorliegend gegenüber dem übrigen Blech,
- Umbiegen des Metallstreifens bzw. der Blechabwicklung derart, dass der Metallstreifen eine radial umlaufende Wandung bildet zwecks Bildung des Schafts 5, wobei die herausgebogenen Teilbereiche gegenüber dem übrigen Metallstreifen nach radial außen hervorstehende Halteelemente 9 bilden.

### Bezugszeichenliste

- 1: Stützhülse
- 2: Ende
- 3: Ende
- 4: Kopfabschnitt
- 5: Schaft
- 6: erster Schaftabschnitt
- 7: zweiter Schaftabschnitt
- 8: dritter Schaftabschnitt
- 9: Halteelement
- 10: Schlitz
- 11: Ausnehmung
- 12: Wandung
- 13: Durchtrittsöffnung
- 14: Hohlkörper
- 15: erste Wandung
- 16: zweite Wandung
- 17: erste Durchgangsöffnung
- 18: zweite Durchgangsöffnung
- 19: Befestigungsmittel
- 20: Anschlagselement
- 21: Anschlagselement

## Patentansprüche

1. Anordnung, wobei die Anordnung eine Stützhülse (1), einen Hohlkörper (14) und ein Befestigungsmittel (19) aufweist, wobei die Stützhülse (1) einteilig ausgebildet ist, wobei die Stützhülse (1) einen Schaft (5) mit einem ersten Schaftabschnitt (6), einem in axialer Richtung (Z) an den ersten Schaftabschnitt (6) angrenzenden zweiten Schaftabschnitt (7) und einem in axialer Richtung (Z) an den zweiten Schaftabschnitt (7) angrenzenden dritten Schaftabschnitt (8) aufweist, wobei der dritte Schaftabschnitt (8) ein Ende (3) der Stützhülse (1) bildet, wobei der zweite Schaftabschnitt (7) ein Haltemittel aufweist, wobei das Haltemittel gegenüber dem ersten und dem dritten Schaftabschnitt (6, 8) nach radial außen hervorsteht und entgegen einer Rückstellkraft nach radial innen verformbar ist, wobei der Schaft (5) über die gesamte axiale Länge des Schafts (5) einen Schlitz (10) aufweist, wobei der Hohlkörper (14) zwei in axialer Richtung (Z) beabstandete Wandungen (15, 16) aufweist, wobei die erste Wandung (15) der zwei Wandungen (15, 16) eine erste Durchgangsöffnung (17) und die zweite Wandung (16) der zwei Wandungen (15, 16) eine zweite Durchgangsöffnung (18) aufweist, wobei die Stützhülse (1) die erste Durchgangsöffnung (17) durchsetzt, wobei das Haltemittel auf einer der zweiten Wandung (16) zugewandten Seite der ersten Wandung (15) angeordnet ist und das Haltemittel die erste Wandung (15) auf der der zweiten Wandung (16) zugewandten Seite in axialer Richtung (Z) hintergreift, wobei das Befestigungsmittel (19) die Stützhülse (1) und die beiden Durchgangsöffnungen (17, 18) durchsetzt, wobei das Befestigungsmittel (19) auf den einander abgewandten Seiten der zwei Wandungen (15, 16) jeweils ein Anschlagselement (20, 21) aufweist, wobei das eine Anschlagselement (20) gegenüber dem anderen Anschlagselement (21) in der axialen Richtung (Z) verstellbar ist, wobei die Stützhülse (1) die zweite Wandung (16) auf einer der ersten Wandung (15) zugewandten Seite kontaktiert.

2. Anordnung nach Anspruch 1, wobei sich der Schlitz (10) über die gesamte axiale Länge der Stützhülse (1) erstreckt.

3. Anordnung nach einem Anspruch 1 oder 2, wobei der Schlitz (10) geradlinig und/oder parallel zu der axialen Richtung (Z) ausgebildet ist.

4. Anordnung nach einem Anspruch 1 bis 3, wobei der Schaft (5) genau einen sich über die gesamte axiale Länge des Schafts (5) erstreckenden Schlitz (10) aufweist.

5. Anordnung nach einem der Ansprüche 1 bis 4, wobei der dritte Schaftabschnitt (8) und/oder der erste Schaftabschnitt (6), vorzugsweise der dritte Schaftabschnitt (8) und der erste Schaftabschnitt (6), besonders bevorzugt der gesamte Schaft (5), abgesehen von dem Schlitz (10) frei von sonstigen Materialschwächungen ist.

6. Anordnung nach einem der Ansprüche 1 bis 5, ein Teilbereich des ersten Schaftabschnitts (6) entgegen der axialen Richtung (Z) gegenüber dem Haltemittel hervorsteht.

7. Anordnung nach einem Anspruch 1 bis 6, wobei der dritte Schaftabschnitt (8) über die gesamte axiale Länge des dritten Schaftabschnitts (8) einen konstanten Querschnitt aufweist, insbesondere der Schaft (5) über die gesamte axiale Länge des Schafts (5) außer im Bereich der Haltemittel einen konstanten Querschnitt aufweist.

8. Anordnung nach einem Anspruch 1 bis 7, wobei das Haltemittel mehrere Halteelemente (9) aufweist, vorzugsweise die mehreren Halteelemente (9) in axialer Richtung (Z) in derselben Ebene angeordnet sind.

9. Anordnung nach einem Anspruch 1 bis 8, wobei die Stützhülse (1) einen Kopfabschnitt (4) aufweist, wobei der erste Schaftabschnitt (6) in axialer Richtung (Z) an den Kopfabschnitt (4) angrenzt, wobei der Kopfabschnitt (4) nach radial außen gegenüber dem dritten Schaftabschnitt (8) hervorsteht, vorzugsweise nach radial außen gegenüber dem Haltemittel hervorsteht.

10. Anordnung nach einem der Ansprüche 1 bis 9, wobei der radiale Überstand des Haltemittels, insbesondere des jeweiligen Halteelements (9), entgegen der axialen Richtung (Z) zunimmt, insbesondere das Haltemittel, vorzugsweise das jeweilige Halteelement (9), keilförmig ausgebildet ist.

11. Anordnung nach einem der Ansprüche 1 bis 10, wobei der Schaft (5) in einer Schnittebene senkrecht zu der axialen Richtung (Z) eine Außenkontur aufweist, wobei die Außenkontur kreisförmig oder ellipsenförmig ist, oder die Außenkontur die Form eines Vielecks, insbesondere eines Vielecks mit abgerundeten Ecken, aufweist.

12. Anordnung nach einem der Ansprüche 1 bis 11, wobei das Haltemittel mehrere als Stege ausgebildete Halteelemente (9) aufweist, wobei der jeweilige Steg im Bereich eines Endes des Stegs, insbesondere im Bereich eines dem dritten Schaftabschnitt (8) zugewandten Endes des Stegs, mit dem übrigen Schaft (5) verbunden ist und das andere Ende des jeweiligen Stegs ein freies Ende ist, wobei der zweite Schaftabschnitt (7) eine Ausnehmung (11) zur Aufnahme der Stege, bei einem Verformen der Stege nach radial innen, aufweist oder wobei der zweite Schaftabschnitt (7) jeweils eine Ausnehmung (11) zur Aufnahme des jeweiligen Stegs, bei einem Verformen des jeweiligen Stegs nach radial innen, aufweist, insbesondere die jeweilige Ausnehmung (11) eine tangentiale Erstreckung aufweist, wobei die tangentiale Erstreckung der jeweiligen Ausnehmung (11) größer ist als eine tangentiale Erstreckung des jeweiligen Stegs.

13. Anordnung nach einem der Ansprüche 1 bis 12, wobei die Stützhülse (1) durch einen gebogenen Metallstreifen, insbesondere einem Blech, gebildet ist, vorzugsweise das Haltemittel durch einen herausgebogenen Teilbereich des Metallstreifens gebildet ist, insbesondere das jeweilige Halteelemente (9) durch einen herausgebogenen Teilbereich des Metallstreifens gebildet ist.

14. Anordnung nach einem der Ansprüche 1 bis 13, wobei die Stützhülse (1) aus einem Metall oder einer Metalllegierung besteht, insbesondere aus einem Stahl, vorzugsweise einem Federstahl, besteht.

## Claims

1. Arrangement, wherein the arrangement has a supporting sleeve (1), has a hollow body (14) and has a fastening means (19), wherein the supporting sleeve (1) is of integral form, wherein the supporting sleeve (1) has a shaft (5) with a first shaft portion (6), with a second shaft portion (7), which adjoins the first shaft portion (6) in an axial direction (Z), and with a third shaft portion (8), which adjoins the second shaft portion (7) in the axial direction (Z), wherein the third shaft portion (8) forms one end (3) of the supporting sleeve (1), wherein the second shaft portion (7) has a retaining means, wherein the retaining means projects radially outwards in relation to the first and third shaft portions (6, 8) and is deformable radially inwards counter to a restoring force, wherein the shaft (5) has a slot (10) over the entire axial length of the shaft (5), wherein the hollow body (14) has two walls (15, 16) which are spaced apart in the axial direction (Z), wherein the first wall (15) of the two walls (15, 16) has a first passage opening (17) and the second wall (16) of the two walls (15, 16) has a second passage opening (18), wherein the supporting sleeve (1) passes through the first passage opening (17), wherein the retaining means is arranged on a side of the first wall (15) that is directed towards the second wall (16) and the retaining means engages behind the first wall (15) in the axial direction (Z) on the side directed towards the second wall (16), wherein the fastening means (19) passes through the supporting sleeve (1) and the two passage openings (17, 18), wherein, on those sides of the two walls (15, 16) which are directed away from one another, the fastening means (19) has in each case one abutment element (20, 21), wherein one abutment element (20) is adjustable in the axial direction (Z) in relation to the other abutment element (21), wherein the supporting sleeve (1) is in contact with the second wall (16) on a side which is directed towards the first wall (15).

2. Arrangement according to Claim 1, wherein the slot (10) extends over the entire axial length of the supporting sleeve (1).

3. Arrangement according to either of Claims 1 and 2, wherein the slot (10) is configured to be straight and/or parallel to the axial direction (Z).

4. Arrangement according to one of Claims 1 to 3, wherein the shaft (5) has precisely one slot (10) which extends over the entire axial length of the shaft (5).

5. Arrangement according to one of Claims 1 to 4, wherein the third shaft portion (8) and/or the first shaft portion (6), preferably the third shaft portion (8) and the first shaft portion (6), particularly preferably the entire shaft (5), apart from the slot (10), are/is free of any other material weakenings.

6. Arrangement according to one of Claims 1 to 5, a sub-region of the first shaft portion (6) projecting in relation to the retaining means counter to the axial direction (Z).

7. Arrangement according to one of Claims 1 to 6, wherein the third shaft portion (8) has a constant cross section over the entire axial length of the third shaft portion (8), and in particular the shaft (5) has a constant cross section over the entire axial length of the shaft (5) apart from in the region of the retaining means.

8. Arrangement according to one of Claims 1 to 7, wherein the retaining means comprises multiple retaining elements (9), and preferably the multiple retaining elements (9) are arranged in the same plane in the axial direction (Z).

9. Arrangement according to one of Claims 1 to 8, wherein the supporting sleeve (1) has a head portion (4), wherein the first shaft portion (6) adjoins the head portion (4) in the axial direction (Z), wherein the head portion (4) projects radially outwards in relation to the third shaft portion (8), and preferably projects radially outwards in relation to the retaining means.

10. Arrangement according to one of Claims 1 to 9, wherein the radial projection of the retaining means, in particular of the respective retaining element (9), increases counter to the axial direction (Z), and in particular the retaining means, preferably the respective retaining element (9), is of wedge-shaped form.

11. Arrangement according to one of Claims 1 to 10, wherein the shaft (5) has an outer contour in a section plane perpendicular to the axial direction (Z), wherein the outer contour is circular or elliptical, or the outer contour has the shape of a polygon, in particular a polygon with rounded corners.

12. Arrangement according to one of Claims 1 to 11, wherein the retaining means comprises multiple retaining elements (9) in the form of webs, wherein the respective web is connected in the region of one end of the web, in particular in the region of an end of the web that is directed towards the third shaft portion (8), to the rest of the shaft (5), and the other end of the respective web is a free end, wherein the second shaft portion (7) has a cutout (11) for receiving the webs in the case of the webs being deformed radially inwards, or wherein the second shaft portion (7) has in each case one cutout (11) for receiving the respective web in the case of the respective web being deformed radially inwards, and in particular the respective cutout (11) has a tangential extent, wherein the tangential extent of the respective cutout (11) is greater than a tangential extent of the respective web.

13. Arrangement according to one of Claims 1 to 12, wherein the supporting sleeve (1) is formed by a bent metal strip, in particular a metal sheet, and preferably the retaining means is formed by a sub-region of the metal strip that is bent outwards, and in particular the respective retaining element (9) is formed by a sub-region of the metal strip that is bent outwards.

14. Arrangement according to one of Claims 1 to 13, wherein the supporting sleeve (1) consists of a metal or a metal alloy, and in particular consists of a steel, preferably a spring steel.

## Revendications

1. Agencement, l'agencement présentant une douille de support (1), un corps creux (14) et un moyen de fixation (19), la douille de support (1) étant réalisée en une seule pièce, la douille de support (1) présentant une tige (5) avec une première section de tige (6), une deuxième section de tige (7) adjacente à la première section de tige (6) dans la direction axiale (Z) et une troisième section de tige (8) adjacente à la deuxième section de tige (7) dans la direction axiale (Z), la troisième section de tige (8) formant une extrémité (3) de la douille de support (1), la deuxième section de tige (7) présentant un moyen de retenue, le moyen de retenue faisant saillie radialement vers l'extérieur par rapport à la première et à la troisième section de tige (6, 8) et étant déformable radialement vers l'intérieur à l'encontre d'une force de rappel, la tige (5) présentant une fente (10) sur toute la longueur axiale de la tige (5), le corps creux (14) présentant deux parois (15, 16) espacées dans la direction axiale (Z), la première paroi (15) des deux parois (15, 16) présentant une première ouverture de passage (17) et la deuxième paroi (16) des deux parois (15, 16) présentant une deuxième ouverture de passage (18), la douille de support (1) traversant la première ouverture de passage (17), le moyen de retenue étant agencé sur un côté de la première paroi (15) tourné vers la deuxième paroi (16) et le moyen de retenue s'engageant derrière la première paroi (15) dans la direction axiale (Z) sur le côté tourné vers la deuxième paroi (16), le moyen de fixation (19) traversant la douille de support (1) et les deux ouvertures de passage (17, 18), le moyen de fixation (19) présentant un élément de butée (20, 21) sur chacun des côtés détournés l'un de l'autre des deux parois (15, 16), l'un des éléments de butée (20) étant réglable par rapport à l'autre élément de butée (21) dans la direction axiale (Z), la douille de support (1) étant en contact avec la deuxième paroi (16) sur un côté tourné vers la première paroi (15)

2. Agencement selon la revendication 1, la fente (10) s'étendant sur toute la longueur axiale de la douille de support (1).

3. Agencement selon l'une quelconque des revendications 1 et 2, la fente (10) étant réalisée rectiligne et/ou parallèle à la direction axiale (Z).

4. Agencement selon les revendications 1 à 3, la tige (5) présentant exactement une fente (10) qui s'étend sur toute la longueur axiale de la tige (5).

5. Agencement selon l'une quelconque des revendications 1 à 4, la troisième section de tige (8) et/ou la première section de tige (6), de préférence la troisième section de tige (8) et la première section de tige (6), de manière particulièrement préférée l'ensemble de la tige (5), étant exempts d'autres affaiblissements de matériau, à l'exception de la fente (10).

6. Agencement selon l'une quelconque des revendications 1 à 5, une zone partielle de la première section de tige (6) faisant saillie à l'encontre de la direction axiale (Z) par rapport au moyen de retenue.

7. Agencement selon l'une quelconque des revendications 1 à 6, la troisième section de tige (8) présentant une section transversale constante sur toute la longueur axiale de la troisième section de tige (8), notamment la tige (5) présentant une section transversale constante sur toute la longueur axiale de la tige (5) sauf dans la zone des moyens de retenue.

8. Agencement selon l'une quelconque des revendications 1 à 7, le moyen de retenue présentant plusieurs éléments de retenue (9), de préférence les plusieurs éléments de retenue (9) étant agencés dans le même plan dans la direction axiale (Z).

9. Agencement selon l'une quelconque des revendications 1 à 8, la douille de support (1) présentant une section de tête (4), la première section de tige (6) étant adjacente à la section de tête (4) dans la direction axiale (Z), la section de tête (4) faisant saillie radialement vers l'extérieur par rapport à la troisième section de tige (8), de préférence faisant saillie radialement vers l'extérieur par rapport au moyen de retenue.

10. Agencement selon l'une quelconque des revendications 1 à 9, la saillie radiale du moyen de retenue, notamment de l'élément de retenue (9) respectif, augmentant à l'encontre de la direction axiale (Z), notamment le moyen de retenue, de préférence l'élément de retenue (9) respectif, étant réalisé en forme de coin.

11. Agencement selon l'une quelconque des revendications 1 à 10, la tige (5) présentant un contour extérieur dans un plan de coupe perpendiculaire à la direction axiale (Z), le contour extérieur étant circulaire ou elliptique, ou le contour extérieur présentant la forme d'un polygone, notamment d'un polygone à coins arrondis.

12. Agencement selon l'une quelconque des revendications 1 à 11, le moyen de retenue présentant plusieurs éléments de retenue (9) réalisés sous forme d'entretoises, l'entretoise respective étant reliée au reste de la tige (5) dans la zone d'une extrémité de l'entretoise, notamment dans la zone d'une extrémité de l'entretoise tournée vers la troisième section de tige (8), et l'autre extrémité de l'entretoise respective étant une extrémité libre, la deuxième section de tige (7) présentant un évidement (11) destiné à recevoir les entretoises lors d'une déformation des entretoises radialement vers l'intérieur, ou la deuxième section de tige (7) présentant respectivement un évidement (11) destiné à recevoir l'entretoise respective lors d'une déformation de l'entretoise respective radialement vers l'intérieur, notamment l'évidement respectif (11) présentant une extension tangentielle, l'extension tangentielle de l'évidement respectif (11) étant supérieure à une extension tangentielle de l'entretoise respective.

13. Agencement selon l'une quelconque des revendications 1 à 12, la douille de support (1) étant formée par une bande métallique pliée, notamment une tôle, de préférence le moyen de retenue étant formé par une zone partielle pliée vers l'extérieur de la bande métallique, notamment l'élément de retenue respectif (9) étant formé par une zone partielle pliée vers l'extérieur de la bande métallique.

14. Agencement selon l'une quelconque des revendications 1 à 13, la douille de support (1) étant constituée d'un métal ou d'un alliage de métaux, notamment d'un acier, de préférence d'un acier à ressort.
